# EUROPEAN PATENT APPLICATION

(11) **EP 4 287 145 A1**
(43) Date of publication of application: **06.12.2023**
(21) Application number: 23160363.0
(22) Date of filing: 07.03.2023
(51) Int. Cl.: G06V 20/52, G06V 10/25, G06V 10/56, G06V 10/74, G06V 10/84, G06V 10/98, G06V 10/82

(54) **STATISTICAL MODEL-BASED FALSE DETECTION REMOVAL ALGORITHM FROM IMAGES**

(30) Priority: 30.05.2022 KR 20220066401; 04.01.2023 KR 20230001007
(71) Applicant: Hanwha Vision Co., Ltd., Seongnam-si, Gyeonggi-do 13488 (KR)
(72) Inventor: Park, Sungyeon, Seongnam-si, Gyeonggi-do (KR); Shin, Hyunhak, Seongnam-si, Gyeonggi-do (KR); Song, Changho, Seongnam-si, Gyeonggi-do (KR)
(74) Representative: Gulde & Partner

(57) **Abstract**

A false detection removal method of an image processing device are disclosed. In the present disclosure, after an object of interest is detected, removing feature-based false detection of the object of interest, removing color-based false detection of the object of interest are perfomed. According to the removing function, a final obkect of interest is obtained, detection performance may be improved even when an object of interest detector is trained with a simple technique using a small amount of data. In the present disclosure, one or more of a surveillance camera, an autonomous vehicle, a user terminal, and a server may be linked to an artificial intelligence module, a robot, an augmented reality (AR) device, a virtual reality (VT) device, and a 5G service.

## Description

### TECHNICAL FIELD

The present disclosure relates to a statistical model-based false detection removal method.

### BACKGROUND

There are various learning-based image analysis technologies that have been trained to detect an object in an image, determine whether an object exists, classify the object if the object exists, and output the type of the object.

Artificial intelligence (AI)-based object detection technology may consume significant resources in the process of classifying new object types, collecting object information of new objects, and learning models. In particular, in the process of learning a model for object recognition, a process of re-learning by reflecting erroneously detected objects may be required to increase the reliability of the model. However, there is a problem in that it is difficult to immediately correct a corresponding result through monitoring of an object detection result, and a process of manually indexing erroneously detected objects during the model learning process may also require considerable resources and time.

### SUMMARY

In view of the above, the present disclosure provides a false detection removal method of an image processing device, capable of improving detection performance even if an object of interest detector is trained with a simple technique using a small amount of data.

The objects to be achieved by the present disclosure are not limited to the above-mentioned objects, and other objects not mentioned may be clearly understood by those skilled in the art from the following description.

According to embodiments of the present disclosure, a false detection removal method of an image processing device includes: detecting an object of interest based on an object of interest recognition model in an image acquired from an image capture device; removing feature-based false detection of the object of interest based on a first false detection filtering model; removing color-based false detection of the object of interest based on a second false detection filtering model; and acquiring a final object of interest without the false detection.

The false detection removal method may further include: training the first false detection filtering model, wherein the training of the first false detection filtering model includes: extracting a specific vector of the object of interest designated in advance; and modeling a distribution of the object of interest on a coordinate space based on the feature vector.

The false detection removal method may include determining an object as an erroneously detected object when a Mahalanobis distance of a feature vector of the object of interest detected by the object of interest recognition model is greater than or equal to a threshold distance.

The false detection removal method may further include training the second false detection filtering model, wherein the training of the second false detection filtering model may include: extracting color information of the object of interest designated in advance; and acquiring a primary color of the object of interest by analyzing colors in the CIE-LAB color space based on the color information.

The false detection removal method may further include: training the object of interest recognition model, wherein the training of the object of interest recognition model may include: receiving a user input designating the object of interest in the image; generating a object of non-interest in at least a portion of a region except for the object of interest in the image; and training the object of interest recognition model using the object of interest and the object of non-interest as training data.

The false detection removal method may include: performing first learning using the trained object recognition model; and additionally performing training N times after the first learning; and automatically extracting location information of a erroneously detected object based on an immediately previous learning result for each learning and changing the erroneously detected object into the object of non-interest.

According to embodiments of the present disclosure, an image processing device includes an image acquisition unit; a storage unit storing a previously trained object of interest recognition model, a first false detection filtering model, and a second false detection filtering model; and a processor detecting an object of interest based on the object of interest recognition model from an image acquired by the image acquisition unit, removing false detection based on a feature of the object of interest by applying the first false detection filtering model to the detected object of interest; and removing color-based false detection for the object of interest by applying the second false detection filtering model.

The processor may extract a feature vector of the object of interest designated in advance, and train the first false detection filtering model to model a distribution of the object of interest in a coordinate space based on the feature vector.

The processor may determine the object as an erroneously detected object when the Mahalanobis distance of the feature vector of the object of interest detected by the object of interest recognition model is greater than or equal to a threshold distance.

The processor may extract color information of the object of interest designated in advance and train the second false detection filtering model to acquire a primary color of the object of interest by analyzing colors in the CIE-LAB color space based on the color information.

The processor may receive a user input designating the object of interest in the image, generate a object of non-interest in at least a portion of a region except for the object of interest in the image, and train the object of interest recognition model using the object of interest and the object of non-interest as learning data.

The processor may perform first learning using the trained object recognition model, and additionally perform training N times after the first learning; and automatically extracting location information of a erroneously detected object based on an immediately previous learning result for each learning and change the fasely detected object into the object of non-interest.

The image processing device may further include a wireless communication unit, wherein the image acquisition unit may obtain a captured image from an external image capture device through the wireless communication unit.

The image processing device may further include a wireless communication unit, wherein the processor may transmit the object of interest recognition model, the first false detection filtering model, and the second false detection filtering model stored in the storage unit to an image capture device through the wireless communication unit.

According to embodiments of the present disclosure, an image processing device includes: an image acquisition unit; a communication unit; a storage unit receiving an object of interest recognition model and a false detection filtering model trained in advance through the communication unit and storing the same; and a processor recognizing an object by applying the object of interest recognition model to an image obtained through the image acquisition unit, and obtaining a final object of interest without false detection by applying the false detection filtering model to the recognized object, wherein the false detection filtering model may include at leasts one of a first false detection filtering model in which a distribution of a feature vector of the object of interest designated in advance in a coordinate space is modeled and a second false detection filtering model measuring a color of the object of interest and classifying the object with a representative color.

The processor may apply the first false detection filtering model to the object of interest detected through the object of interest recognition model, and apply the second false detection filtering model to a result of applying the first false detection filtering model.

The image processing device may include at least one of a mobile terminal and a surveillance camera.

According to the false detection control method of an image processing device according to an embodiment of the present disclosure, detection performance may be improved even when an object of interest detector is trained with a simple technique using a small amount of data.

The effects to be achieved by the present disclosure are not limited to the above-mentioned effects, and other effects not mentioned may be clearly understood by those skilled in the art from the following description.

### BRIEF DESCRIPTION OF THE DRAWINGS

FIG. 1 is a diagram illustrating a surveillance camera system for recognizing an object by applying a trained object recognition model and utilizing a result according to an embodiment of the present disclosure.
FIG. 2 is a diagram illustrating an artificial intelligence (AI) device (module) applied to training an object recognition model according to an embodiment of the present disclosure.
FIG. 3 is a diagram illustrating an image capture device according to an embodiment of the present disclosure.
FIG. 4 is a diagram illustrating a computing device training an object recognition model according to an embodiment of the present disclosure.
FIG. 5 is an overall flowchart illustrating a false detection filtering method according to an embodiment of the present disclosure.
FIG. 6 is a flowchart of a method for training an object recognition model according to an embodiment of the present disclosure.
FIG. 7 is a diagram illustrating a process of using an object of non-interest as learning data in a process of training an object recognition model according to an embodiment of the present disclosure.
FIG. 8 is a diagram illustrating an example of generating learning data of an object recognition model according to an embodiment of the present disclosure.
FIG. 9 is a flowchart of an object detection method in an object detection device according to an embodiment of the present disclosure.
FIG. 10 is a flowchart of an object recognition method according to an embodiment of the present disclosure.

### DETAILED DESCRIPTION

Hereinafter, embodiments of the disclosure will be described in detail with reference to the attached drawings. The same or similar components are given the same reference numbers and redundant description thereof is omitted. The suffixes "module" and "unit" of elements herein are used for convenience of description and thus may be used interchangeably and do not have any distinguishable meanings or functions. Further, in the following description, if a detailed description of known techniques associated with the present disclosure would unnecessarily obscure the gist of the present disclosure, detailed description thereof will be omitted. In addition, the attached drawings are provided for easy understanding of embodiments of the disclosure and do not limit technical spirits of the disclosure, and the embodiments should be construed as including all modifications, equivalents, and alternatives falling within the spirit and scope of the embodiments.

While terms, such as "first", "second", etc., may be used to describe various components, such components must not be limited by the above terms. The above terms are used only to distinguish one component from another.

When an element is "coupled" or "connected" to another element, it should be understood that a third element may be present between the two elements although the element may be directly coupled or connected to the other element. When an element is "directly coupled" or "directly connected" to another element, it should be understood that no element is present between the two elements.

The singular forms are intended to include the plural forms as well, unless the context clearly indicates otherwise.

In addition, in the specification, it will be further understood that the terms "comprise" and "include" specify the presence of stated features, integers, steps, operations, elements, components, and/or combinations thereof, but do not preclude the presence or addition of one or more other features, integers, steps, operations, elements, components, and/or combinations.

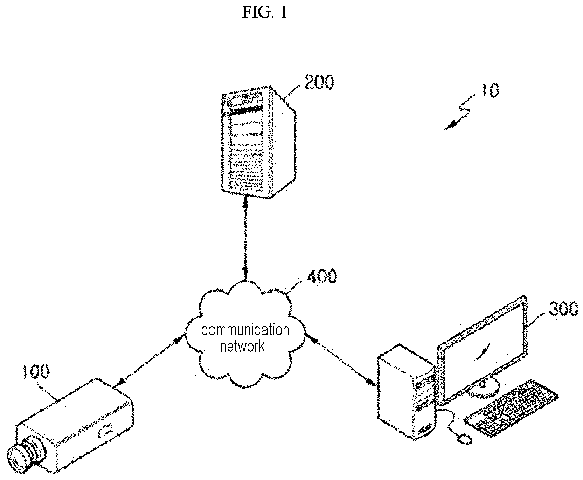

FIG. 1 is a diagram illustrating a surveillance camera system for recognizing an object by applying a trained object recognition model and utilizing a result according to an embodiment of the present disclosure.

Referring to FIG. 1, a surveillance camera system 10 according to one embodiment of the present disclosure may include an image capture device 100 and an image management server 200. The image capture device 100 may be an electronic image capture device disposed at a fixed location in a specific place, may be an electronic image capture device that may be moved automatically or manually along a predetermined path, or may be an electronic image capture device that may be moved by a person or a robot. The image capture device 100 may be an IP (Internet protocol) camera connected to the wired/wireless Internet and used. The image capture device 100 may be a PTZ (pan-tilt-zoom) camera having pan, tilt, and zoom functions. The image capture device 100 may have a function of recording a monitored area or taking a picture. The image capture device 100 may have a function of recording a sound generated in a monitored area. When a change, such as movement or sound occurs in the monitored area, the image capture device 100 may have a function of generating a notification or recording or photographing. The image capture device 100 may receive and store the trained object recognition learning model from the image management server 200. Accordingly, the image capture device 100 may perform an object recognition operation using the object recognition learning model.

The image management server 200 may be a device that receives and stores an image as it is captured by the image capture device 100 and/or an image obtained by editing the image. The image management server 200 may analyze the received image to correspond to the purpose. For example, the image management server 200 may detect an object in the image using an object detection algorithm. An AI-based algorithm may be applied to the object detection algorithm, and an object may be detected by applying a pre-trained artificial neural network model.

Meanwhile, the image management server 200 may store various learning models suitable for the purpose of image analysis. In addition to the aforementioned learning model for object detection, a model capable of acquiring object characteristic information that allows the detected obj ect to be utilized may be stored. The image management server 200 may perform an operation of training the learning model for object recognition described above.

Meanwhile, the model for object recognition may be trained in the aforementioned image management server 200 and transmitted to the image capture device 100, but training of the object recognition model and re-training of the model are performed in the image capture device 100.

In addition, the image management server 200 may analyze the received image to generate metadata and index information for the corresponding metadata. The image management server 200 may analyze image information and/or sound information included in the received image together or separately to generate metadata and index information for the metadata.

The surveillance camera system 10 may further include an external device 300 capable of performing wired/wireless communication with the image capture device 100 and/or the image management server 200.

The external device 300 may transmit an information provision request signal for requesting to provide all or part of an image to the image management server 200. The external device 300 may transmit an information provision request signal to the image management server 200 to request whether or not an object exists as the image analysis result. In addition, the external device 300 may transmit, to the image management server 200, metadata obtained by analyzing an image and/or an information provision request signal for requesting index information for the metadata.

The surveillance camera system 10 may further include a communication network 400 that is a wired/wireless communication path between the image capture device 100, the image management server 200, and/or the external device 300. The communication network 400 may include, for example, a wired network, such as LANs (Local Area Networks), WANs (Wide Area Networks), MANs (Metropolitan Area Networks), ISDNs (Integrated Service Digital Networks), and a wireless network, such as wireless LANs, CDMA, Bluetooth, and satellite communication, but the scope of the present disclosure is not limited thereto.

The image capture device 100 may receive and store an object recognition learning model trained in the image management server 200. Accordingly, the image capture device 100 may perform an object recognition operation using the object recognition learning model. In addition, the image capture device 100 may determine a false detection among candidates detected as an object of interest according to a predetermined criterion. Here, the false detection (false positive) means a state in which a negative is detected as a positive (false detection), and may mean a state in which a object of non-interest, not an object of interest designated by a user, is detected as an object of interest. The predetermined criterion is a criterion for filtering erroneously detected objects, and reference data for filtering false detection may be received from the image management server 200 in advance. The image capture device 100 may output a final object of interest detection result through a false detection filtering operation.

According to an embodiment, the image management server 200 may generate false detection filtering data for filtering erroneously detected objects. The false detection filtering data may be data obtained by modeling a stochastic distribution of a feature vector of an object of interest. The false detection filtering data may be data obtained as primary color information by extracting color information of the object of interest. The image management server 200 may transmit the false detection filtering data together with the object recognition learning model to the image capture device 100 so that the image capture device may perform false detection more easily in an object detection process.

In the present disclosure, the operation of extracting a feature vector of the object of interest and the operation of extracting the primary color information of the object of interest and analyzing the color information of the object of interest for training the object of interest detection model as described above are performed in the image management server 200, but the present disclosure is not limited thereto. According to an embodiment of the present disclosure, training of the object of interest detection model may also be performed in the image capture device 100. According to an embodiment, the image capture device 100 may receive feature vector information of an object of interest extracted from the image management server 200 and train a distribution model on the coordinate space of the object of interest based on the received feature vector information. Also, the image capture device 100 may receive primary color information of the extracted object of interest from the image management server 200 to train a color model of the object of interest.

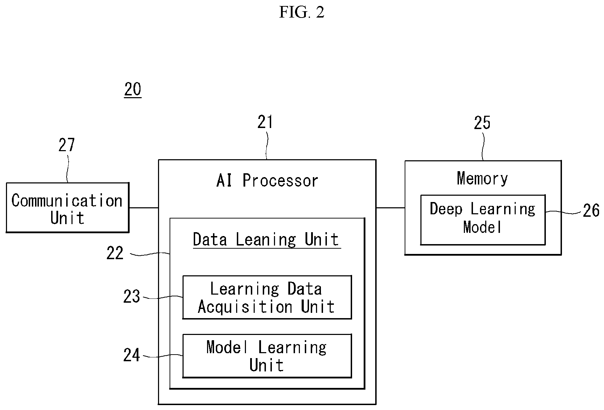

FIG. 2 is a diagram illustrating an AI (artificial intelligence) device (module) applied to training of the object recognition model according to one embodiment of the present disclosure.

Embodiments of the present disclosure may be implemented through a computing device for training a model for object recognition, and the computing device may include the image management server 200 (see FIG. 1) described in FIG. 1, but the present disclosure is not limited thereto, and a dedicated device for training an AI model for recognizing an object in an image may also be included. The dedicated device may be implemented in the form of a software module or hardware module executed by a processor, or in the form of a combination of a software module and a hardware module.

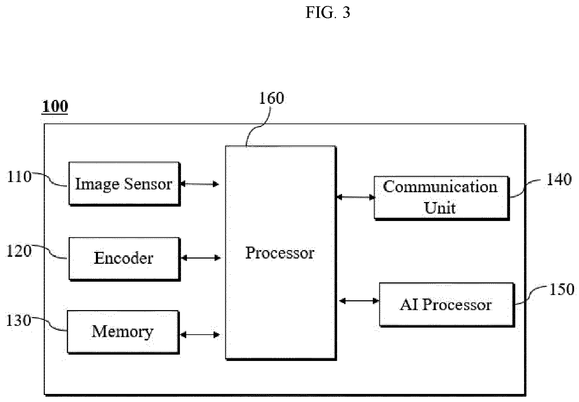

Hereinafter, the dedicated AI device 20 for implementing the object recognition learning model will be described in FIG. 2, and a block configuration for implementing an object recognition learning model according to one embodiment of the present disclosure in the image management server 200 (see FIG. 1) will be described in FIG. 3. All or at least some of the functions common to the model training function described in FIG. 2 may be directly applied to FIG. 3, and in describing FIG. 3, redundant descriptions of functions common to FIG. 2 will be omitted.

Referring to FIG. 2, the AI device 20 may include an electronic device including an AI module capable of performing AI processing, or a server including an AI module. In addition, the AI device 20 may be included the image capture device 100 or the image management server 200 as at least a part thereof to perform at least a portion of AI processing together.

The AI processing may include all operations related to a control unit of the image capture device 100 or the image management server 200. For example, the image capture device 100 or the image management server 200 may AI-process the obtained image signal to perform processing/determination and control signal generation operations.

The AI device 20 may be a client device that directly uses the AI processing result or a device in a cloud environment that provides the AI processing result to other devices. The AI device 20 is a computing device capable of learning a neural network, and may be implemented in various electronic devices, such as a server, a desktop PC, a notebook PC, and a tablet PC.

The AI device 20 may include an AI processor 21, a memory 25, and/or a communication unit 27.

Here, the neural network for recognizing data related to image capture device(100) may be designed to simulate the brain structure of human on a computer and may include a plurality of network nodes having weights and simulating the neurons of human neural network. The plurality of network nodes may transmit and receive data in accordance with each connection relationship to simulate the synaptic activity of neurons in which neurons transmit and receive signals through synapses. Here, the neural network may include a deep learning model developed from a neural network model. In the deep learning model, a plurality of network nodes is positioned in different layers and may transmit and receive data in accordance with a convolution connection relationship. The neural network, for example, includes various deep learning techniques, such as deep neural networks (DNN), convolutional deep neural networks(CNN), recurrent neural networks (RNN), a restricted boltzmann machine (RBM), deep belief networks (DBN), and a deep Q-network, and may be applied to fields, such as computer vision, voice recognition, natural language processing, and voice/signal processing.

Meanwhile, a processor that performs the functions described above may be a general purpose processor (e.g., a CPU), but may be an AI-only processor (e.g., a GPU) for artificial intelligence learning.

The memory 25 may store various programs and data for the operation of the AI device 20. The memory 25 may be a nonvolatile memory, a volatile memory, a flash-memory, a hard disk drive (HDD), a solid state drive (SDD), or the like. The memory 25 is accessed by the AI processor 21 and reading-out/recording/correcting/deleting/updating, etc. Of data by the AI processor 21 may be performed. Further, the memory 25 may store a neural network model (e.g., a deep learning model 26) generated through a learning algorithm for data classification/recognition according to an embodiment of the present disclosure.

Meanwhile, the AI processor 21 may include a data learning unit 22 that learns a neural network for data classification/recognition. The data learning unit 22 may learn references about what learning data are used and how to classify and recognize data using the learning data in order to determine data classification/recognition. The data learning unit 22 may learn a deep learning model by acquiring learning data to be used for learning and by applying the acquired learning data to the deep learning model.

The data learning unit 22 may be manufactured in the type of at least one hardware chip and mounted on the AI device 20. For example, the data learning unit 22 may be manufactured in a hardware chip type only for artificial intelligence, and may be manufactured as a portion of a general purpose processor (CPU) or a graphics processing unit (GPU) and mounted on the AI device 20. Further, the data learning unit 22 may be implemented as a software module. When the data leaning unit 22 is implemented as a software module (or a program module including instructions), the software module may be stored in non-transitory computer readable media that may be read through a computer. In this case, at least one software module may be provided by an OS (operating system) or may be provided by an application.

The data learning unit 22 may include a learning data acquiring unit 23 and a model learning unit 24.

The learning data acquisition unit 23 may acquire learning data required for a neural network model for classifying and recognizing data. According to one embodiment of the present disclosure, the learning data may include information on object of interest designated by a user in an image captured by the image capture device, and information on object of non-interest selected from a region excluding the object of interest in the image. The information on object of interest may include location information of the object of interest in the image. The location information may include coordinate information of a bounding box of the object of interest. The coordinate information may include vertex coordinates and center coordinates of the bounding box. Meanwhile, the object of non-interest in the learning data may be randomly designated by the processor or selected based on a predetermined criterion.

The model learning unit 24 may perform learning such that a neural network model has a determination reference about how to classify predetermined data, using the acquired learning data. In this case, the model learning unit 24 may train a neural network model through supervised learning that uses at least some of learning data as a determination reference. Alternatively, the model learning data 24 may train a neural network model through unsupervised learning that finds out a determination reference by performing training by itself using learning data without supervision. Further, the model learning unit 24 may train a neural network model through reinforcement learning using feedback about whether the result of situation determination according to learning is correct. Further, the model learning unit 24 may train a neural network model using a learning algorithm including error back-propagation or gradient decent.

According to one embodiment of the present disclosure, in case where an object that is not designated as an object of interest as a result of learning based on the learning data is recognized as an object of interest, the model training unit 24 may determine it as an erroneously detected object to change the erroneously detected object to an object of non-interest, and then may apply it to the model retraining process.

Meanwhile, in the present disclosure, the erroneously detected object may be used for training or re-training in order to minimize false detection in the object recognition process. In addition, the product to which the object recognition technology of the present disclosure is applied may be applied to a surveillance camera, and in particular, in the case of a personal surveillance camera, the types and number of objects of interest may be restrictive. Accordingly, based on the fact that the types and amount of learning data may be limited, a meta-learning method that minimizes the use of learning data may be applied. Meta-learning is a methodology that enables machines to learn rules (meta-knowledge) on their own by automating the machine learning process which was controlled by humans.

As a field of meta-learning, few-shot learning is a method of learning how similar (or different) given data is to other data. The few-shot learning with a very small number of data may include training data and test data (query data), and such a few-shot learning task is called 'N-way K-shot'. Here, N may mean a category (class), and K may mean the number of training data for each class. In addition, as K, the number of shots, increases, the predictive performance (accuracy of inference) of data may increase, and few-shot learning may mean model learning in a situation where K is small. In one embodiment of the present disclosure, since the number of objects of interest specified by the user is restrictive, the erroneously detected object recognition algorithm may be learned through few-shot learning. When the neural network model is trained, the model training unit 24 may store the trained neural network model in a memory. The model training unit 24 may store the trained neural network model in the memory of the server connected to the AI device 20 through a wired or wireless network.

The data learning unit 22 may further include a learning data preprocessor (not shown) and a learning data selector (not shown) to improve the analysis result of a recognition model or reduce resources or time for generating a recognition model.

The learning data preprocessor may preprocess acquired data such that the acquired data may be used in learning for situation determination. For example, the learning data preprocessor may process acquired data in a predetermined format such that the model learning unit 24 may use learning data acquired for learning for image recognition.

Further, the learning data selector may select data for learning from the learning data acquired by the learning data acquiring unit 23 or the learning data preprocessed by the preprocessor. The selected learning data may be provided to the model learning unit 24. For example, the learning data selector may select only data for objects included in a specific area as learning data by detecting the specific area in an image acquired through a camera of a vehicle.

Further, the data learning unit 22 may further include a model estimator (not shown) to improve the analysis result of a neural network model.

The model estimator inputs estimation data to a neural network model, and when an analysis result output from the estimation data does not satisfy a predetermined reference, it may make the model learning unit 22 perform learning again. In this case, the estimation data may be data defined in advance for estimating a recognition model. For example, when the number or ratio of estimation data with an incorrect analysis result of the analysis result of a recognition model learned with respect to estimation data exceeds a predetermined threshold, the model estimator may estimate that a predetermined reference is not satisfied.

According to one embodiment of the present disclosure, when an erroneously detected object is found as a result of performing an object detection operation based on the trained model, the model evaluator may convert the erroneously detected object into an object of non-interest to retrain the model.

The communication unit 27 may transmit the AI processing result of the AI processor 21 to an external electronic device. For example, the external electronic device may include a surveillance camera, a Bluetooth device, an autonomous vehicle, a robot, a drone, an AR (augmented reality) device, a mobile device, a home appliance, and the like.

Meanwhile, the AI device 20 shown in FIG. 2 has been functionally divided into the AI processor 21, the memory 25, the communication unit 27, and the like, but the aforementioned components are integrated as one module and it may also be called an AI module.

In the present disclosure, at least one of a surveillance camera, an autonomous vehicle, a user terminal, and a server may be linked to an AI module, a robot, an augmented reality (AR) device, a virtual reality (VR) device, a device related to a 5G service, and the like.

FIG. 3 is a block diagram illustrating a surveillance camera according to an embodiment of the present disclosure.

FIG. 3 is a block diagram illustrating a configuration of the camera shown in FIG. 1.

Referring to FIG. 3, as an example, a camera 100 is a network camera that performs an intelligent image analysis function and generates a signal of the image analysis, but the operation of the network surveillance camera system according to an embodiment of the present disclosure is not limited thereto.

The camera 100 includes an image sensor 110, an encoder 120, a memory 130, a communication interface 140, AI processor 150, a preocessor 160.

The image sensor 110 performs a function of acquiring an image by photographing a surveillance region, and may be implemented with, for example, a CCD (Charge-Coupled Device) sensor, a CMOS (Complementary Metal-Oxide-Semiconductor) sensor, and the like.

The encoder 120 performs an operation of encoding the image acquired through the image sensor 110 into a digital signal, based on, for example, H.264, H.265, MPEG (Moving Picture Experts Group), M-JPEG (Motion Joint Photographic Experts Group) standards or the like.

The memory 130 may store image data, audio data, still images, metadata, and the like. As mentioned above, the metadata may be text-based data including object detection information (movement, sound, intrusion into a designated area, etc.) and object identification information (person, car, face, hat, clothes, etc.) photographed in the surveillance region, and a detected location information (coordinates, size, etc.).

In addition, the still image is generated together with the text-based metadata and stored in the memory 130, and may be generated by capturing image information for a specific analysis region among the image analysis information. For example, the still image may be implemented as a JPEG image file.

For example, the still image may be generated by cropping a specific region of the image data determined to be an identifiable object among the image data of the surveillance area detected for a specific region and a specific period, and may be transmitted in real time together with the text-based metadata.

The communication unit 140 transmits the image data, audio data, still image, and/or metadata to the image receiving/searching device. The communication unit 140 according to an embodiment may transmit image data, audio data, still images, and/or metadata to the image receiving device 300 in real time. The communication interface may perform at least one communication function among wired and wireless LAN (Local Area Network), Wi-Fi, ZigBee, Bluetooth, and Near Field Communication.

The AI processor 150 is designed for an artificial intelligence image processing and applies a deep learning based object detection algorithm which is learned in the image acquired through the surveillance camera system according to an embodiment of the present disclosure. The AI processor 150 may be implemented as an integral module with the processor 260 that controls the overall system or an independent module.

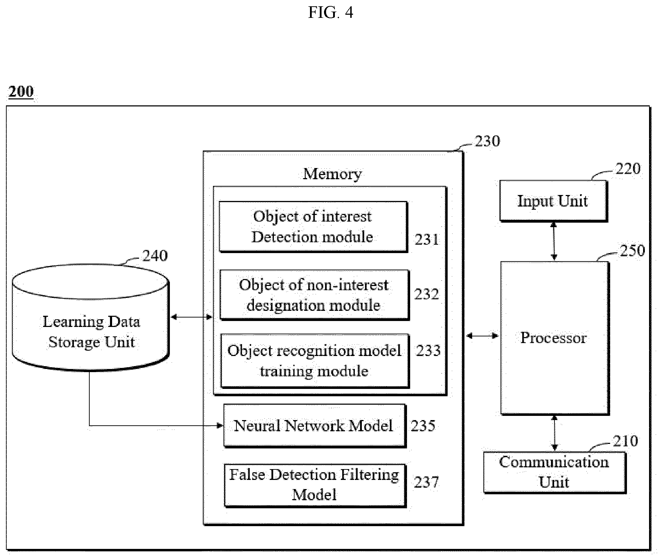

FIG. 4 is a diagram illustrating the computing device for training the object recognition model according to one embodiment of the present disclosure. The computing device 200 is a device capable of performing the same functions as the image management server 200 of FIG. 1, and in this specification, the image processing device performs the same functions as the computing device 200 and the image management server 200 may be done.

The computing device 200 is a device for processing an image acquired through the image capture device 100 (see FIG. 1) or the communication unit 210 and performing various calculations. According to one embodiment of the present disclosure, the computing device 200 illustrated in FIG. 1 may correspond to the image management server 200. However, the computing device 200 is not limited thereto, and may be at least one of a smartphone, a tablet PC (personal computer), a mobile phone, a video phone, an e-book reader, a desktop PC, a laptop PC, a netbook computer, a workstation, a PDA (personal digital assistant), a PMP (portable multimedia player), an MP3 player, a mobile medical device, a wearable device, and an IP camera.

Referring to FIG. 4, the computing device 200 may include a communication unit 210, an input unit 220, a memory 230, a learning data storage unit 240, and a processor 250.

The communication unit 210 is configured to transmit and receive data between the computing device 200 and another electronic device. The communication unit 210 may receive an image from the image capture device, train the object recognition learning model, and transmit it to the image capture device. For example, the communication unit 210 may perform data communication with a server or another device using at least one of wired/wireless communication methods including Ethernet, a wired/wireless local area network (LAN), Wi-Fi, Wi-Fi Direct (WFD), and wireless Gigabit Alliance (WiGig).

The input unit 200 may include a user input unit, and according to one embodiment of the present disclosure, may receive an input for designating an object of interest in an image as a learning target through the user input unit. The user input unit may include a key input unit, a touch screen provided in a display, and the like. When receiving an input for selecting an object of interest in an image displayed on the touch screen, the processor may designate the corresponding object as the object of interest. The processor may store location information of the object of interest by extracting location information of the object input to the touch screen.

For example, the memory 230 may include at least one of a flash memory type, a hard disk type, a multimedia card micro type, and a card type of memory (e.g., SD or XD memory etc.), RAM (Random Access Memory, SRAM (Static Random Access Memory), ROM (Read-Only Memory), EEPROM (Electrically Erasable Programmable Read-Only Memory), PROM (Programmable Read-Only Memory), a magnetic memory, a magnetic disk, and an optical disk.

The memory 230 may store a program including instructions related to the performance of a function or operation capable of generating learning data from the image received from the image capture device through the communication unit 210, performing training of the object recognition model based on the generated learning data, and automatically processing an erroneously detected object in a model training process. Instructions, algorithms, data structures, and program codes stored in the memory 230 may be implemented in a programming or scripting language, such as, for example, C, C++, Java, assembler, or the like.

The memory 230 may include various modules for managing learning data. The plurality of modules included in the memory means a unit for processing a function or operation performed by the processor 250, which may be implemented in software, such as instructions or program codes.

The object recognition model training method described herein may be implemented by executing instructions or program codes of a program stored in the memory.

The learning data management module may include an object of interest detection module 231, an object of non-interest designation module 232, an object recognition model training module 233, and a false detection determination module 234.

The object of interest detection module 231 detects a designated object of interest in an image captured by the image capture device through a preset input. The object of interest may mean an object of interest that the user wants to detect from the image. In the present disclosure, the object of interest may be referred to as a positive object. The object of interest may include any object to be detected through the image capture device, such as a person, an animal, a vehicle, or more specifically, a human face. The object of interest detection module 231 may display a bounding box with respect to a designated object, and extract location information of the object as a coordinate value of each corner of the bounding box. The location information of the object extracted by the object of interest detection module 231 may be stored in the learning data storage unit 241.

The processor 250 may detect an object of interest from a pre-prepared image by executing instructions or program codes related to the object of interest detection module 231.

The object of non-interest detection module 232 may generate an object of non-interest by designating at least a portion of a region excluding the object of interest in the image. The object of non-interest may refer to all objects except for the designated object of interest. However, there may be a case in which an object not designated as the object of interest is recognized as the object of interest while object recognition is performed based on the trained model. In this case, since the reliability of the trained model is lowered, when objects of non-interest are designated as independent learning data as negative objects and used for training of the object recognition model, the recognition rate of the object of interest using the model may be increased.

In the present disclosure, the object of non-interest designation module 232 may randomly generate an object of non-interest or generate an object of non-interest based on a predetermined criterion to utilize it as learning data together with a pre-designated object of interest. The obj ect of non-interest data generated through the object of non-interest designation module 232 may be stored in the learning data storage unit 240. Meanwhile, the object of non-interest designation module 232 may perform an operation of additionally designating an erroneously detected object as an object of non-interest while performing an object recognition operation through the trained model. That is, in one embodiment of the present disclosure, the object of non-interest may be generated before starting the training of the object recognition model (in a learning data preparation process) or may be additionally designated during the model training process. Here, the object of non-interest additionally designated during the model training process may include an object that is an erroneously detected object converted to an object of non-interest, or an object that is not the erroneously detected object, but is added as an object of non-interest based on the confidence score of the pre-trained model.

The object of non-interest designation module 232 may generate N number of sets of objects of non-interest having different attributes. Here, the N number of sets of obj ects of non-interest may include a first set of objects of non-interest randomly designated by the processor 250 in a region excluding the object of interest. In addition, the N number of sets of objects of non-interest may include a plurality of second sets of objects of non-interest generated by generating grid regions in which an image is divided at a predetermined interval and changing the grid interval in a grid region excluding the designated object of interest among the grid regions. For example, the processor 250 may divide an image at a first grid interval to generate an object of non-interest, and may designate a plurality of specific unit cells in a region excluding the object of interest. Alternatively, the processor 250 may designate a plurality of combination cells in which the unit grids are combined. Here, the selected cell may mean a pixel unit cell in the image or a unit grid divided in the entire image area.

The processor 250 may select a specific unit cell or a specific combination cell in the process of designating at least one object of non-interest region in the grid regions, and then select adjacent cells as object of non-interest regions based on a predetermined distance from the selected cell.

The processor 250 may generate an object of non-interest from a pre-prepared image by executing instructions or program codes related to the object of non-interest detection module 232.

The object recognition model training module 233 may train the artificial neural network model based on the object of non-interest and the object of interest stored in the learning data storage unit 240. The object recognition model training module 233 may repeatedly perform training in order to reflect the false detection result.

According to one embodiment, the object recognition model training module 233 may train the object recognition model based on a designated object of interest and an object of non-interest randomly selected in a region excluding the object of interest region in the image. The object recognition model training module 233 may determine whether an erroneously detected object exists as a result of performing an object recognition operation based on the trained model. The object recognition model training module 233 may automatically change the erroneously detected object to an object of non-interest. The object recognition model training module 233 may retrain the object recognition model using the object of interest, the randomly designated object of non-interest, and the later changed object of non-interest as learning data.

In addition, according to one embodiment, the object recognition model training module 233 may train the object recognition model in a state in which only information on the object of interest is acquired before the initial training starts. When an erroneously detected object is detected by performing an object recognition operation based on the trained model after performing a model training operation without information on object of non-interest, the object recognition model training module 233 may convert the erroneously detected object to an object of non-interest and re-train the model.

The object recognition model trained through the object recognition model training module 233 may be configured as a neural network model 235 and stored in a memory.

In addition, according to one embodiment, the object recognition model training module 233 may generate a plurality of sets of objects of non-interest while changing the grid interval after dividing the designated object of interest image into grids of a predetermined interval. When the plurality of sets of object of non-interest are five sets, the object recognition model training module 233 may train and generate a total of five object recognition models. Since the five trained object recognition models have different types of objects of non-interest used as learning data, the reliability of the object recognition models may also be different. Accordingly, the object recognition model training module 233 may select any one of the plurality of different object recognition models and configure it as a neural network model. The object recognition model training module 233 may generate a validation set based on the learning data to select any one of the five models as an object recognition model and configure it as a neural network model.

The processor 250 may train the object recognition model by executing instructions or program codes related to the object recognition model training module 233.

The neural network model 235 is an AI model obtained by performing training using stored learning data. In one embodiment, the neural network model 235 may include model parameters obtained through training performed before performing the object recognition operation. Here, the model parameter may include a weight and a bias with respect to a plurality of layers included in the neural network model. The previously learned model parameter may be obtained by performing supervised learning in which a plurality of original images are applied as input and a label on information on an object of interest designated in the plurality of original images is applied as a groundtruth.

Meanwhile, the object recognition model trained according to one embodiment of the present disclosure is applied with a machine learning-based object detection algorithm learned as an object of interest in an image obtained through a surveillance camera system.

Meanwhile, according to one embodiment of the present disclosure, a method learned in a process of detecting an erroneously detected object based on machine learning may also be applied in a process of implementing a deep learning-based training model. For example, the learning method applied to one embodiment of the present disclosure may be applied to a process of implementing a YOLO (You Only Lock Once) algorithm. YOLO is an AI algorithm suitable for surveillance cameras that process real-time videos because of its fast object detection speed. Unlike other object-based algorithms (Faster R-CNN, R_FCN, FPN-FRCN, etc.), the YOLO algorithm outputs a bounding box indicating the position of each object and the classification probability of what the object is as a result of resizing a single input image and passing it through a single neural network only once. Finally, one object is detected once through non-max suppression. Meanwhile, the learning method of the object recognition model disclosed in the present disclosure is not limited to the aforementioned YOLO and may be implemented by various deep learning algorithms.

The learning data storage unit 240 is a database for storing learning data generated by the object of interest detection module 231 and the object of non-interest designation module 232. In one embodiment, the learning data storage unit 240 may be configured as a nonvolatile memory. Non-volatile memory refers to a storage medium in which information is stored and maintained even when power is not supplied, and the stored information may be used again when power is supplied. The learning data storage unit 240 may include, for example, at least one of a flash memory, a hard disk, a solid state drive (SSD), a multimedia card micro type or a card type of memory (e.g., SD or XD memory), a read only memory (ROM), a magnetic memory, a magnetic disk, and an optical disk.

In FIG. 4, the learning data storage unit 240 is illustrated as a separate component other than the memory 230 of the computing device 200, but is not limited thereto. In one embodiment, the learning data storage unit 240 may be included in the memory 230. Alternatively, the learning data storage unit 240 is a component not included in the computing device 200 and may be connected through wired/wireless communication with the communication unit 210.

A false detection filtering model 237 may extract a feature vector of an object of interest designated by the user and construct a probability distribution of the extracted feature vector. The probability distribution may refer to a distribution formed by coordinate values of feature vectors of a plurality of objects of interest. Also, the false detection filtering model 237 may determine a threshold distance for determining an object of interest based on the probability distribution of the feature vector. Accordingly, the false detection filtering model 237 may provide a criterion for filtering a false detection by comparing a feature vector of a specific object recognized through the modeling of the feature vector distribution of the designated object of interest with the predefined threshold distance in the feature vector distribution of the designated object of interest.

In addition, the false detection filtering model 237 may extract and analyze color information from the object of interest, and acquire primary color information. Accordingly, the false detection filtering model 237 may provide criteria for filtering whether false detection occurs based on the color information of the object of interest.

Data modeled by the false detection filtering model 237 may be transmitted to the image capturing device 100 together with a pre-trained object of interest recognition model. The image capture device 100 may utilize data described above in the process of detecting an object of interest.

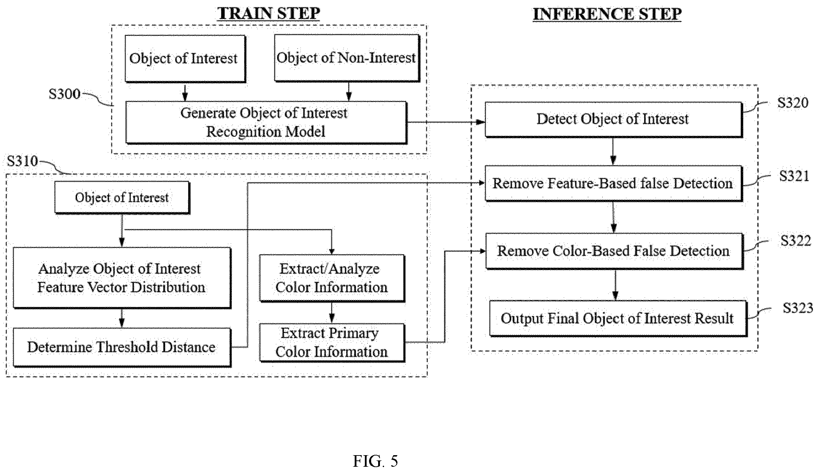

FIG. 5 is an overall flowchart illustrating a false detection filtering method according to an embodiment of the present disclosure.

Referring to FIG. 5, in order to perform false detection during an object recognition process in the image capturing device, an object recognition model and a model capable of filtering false detection need to be provided. In the present disclosure, although a training step and an infering step are classified for convenience of description, a training device for training an object recognition model and an infering device for detecting an object using a trained model and removing false detection may also be classified. However, the aforementioned classification of the training step, the infering step, the training device, and the infering device is for convenience of description, and at least some functions of each of the training device and the infering device may be mixed or combined with each other in each step (or each device).

As shown in FIG. 5, the training device may train a model for accurate object recognition by performing steps S300 and S310. In S300, an object recognition model may be trained based on an object of interest and an object of non-interest. In addition, in S310, when an object detected based on the object recognition model trained in S300 is not an object of interest desired by the user, a false detection model may be trained to obtain a final object of interest by filtering the object. The false detection model may filter a final object of interest among detected objects based on a feature vector distribution and color information of the object of interest.

The training device may probabilistically model an object of interest based on the learned data to generate a model capable of classifying false detections and a model capable of analyzing primary color information. An object recognition model is one of the machine learning fields, and a support vector machine (SVM), which is a supervised learning model for pattern recognition and data analysis, may be applied. The training device may train an object recognition model using an object of interest designated by a user and an object of non-interest generated according to a predetermined criterion.

The training device may configure a model for the distribution of the object of interest. For example, the training device may identify a principal component (PC) of a spread in a state in which the feature vector data of the object of interest are distributed in space using principal component analysis (PCA). When the feature vectors of the object of interest are spread in a coordinate space, the dimension may be reduced by finding an axis that best expresses the variance of the data. The training device may determine a threshold distance that may be determined as an object of interest by setting a distribution of the object of interest based on the mean and variance of the object of interest.

In addition, the training device may configure a color classification model that classifies objects by representative colors of the object of interest by measuring colors mainly represented by the object of interest. The training device may obtain primary color information of the object of interest by extracting color information through a color classification model.

According to an embodiment, the training device may generate a first false detection model based on PCA and a second false detection model based on color in the training step, and when an object is detected by the image capturing device, the detected object may be utilized in false detection filtering using the first false detection model and the second false detection model.

The infering device may acquire a final object of interest result by filtering the object of interest detection result based on the object recognition model and the false detection model trained in the training step. The infering device detects an object of interest based on the object recognition model (object of interest recognition model) generated in the training step (S320). In addition, the infering device may perform an operation of removing feature-based false detection based on the first false detection model generated in the training step (S321). The infering device may perform an operation of removing color-based false detection based on the second false detection model generated in the training step (S322). The infering device may output a final result of the object of interest based on the false detection removal operation (S323).

The infering device capable of performing the infering step may be the image capture device 100 described in FIG. 1, but the present disclosure is not limited thereto, and when the object detecting operation is performed by the image management server 200, the infering device perofrming the infering step may be the image management server 200.

The AI system used in the present disclosure may use a deep learning-based object detection algorithm trained as an object of interest in a surveillance camera. An object detection algorithm that is mainly used may include You Only Look Once (YOLO). YOLO is an AI algorithm that is suitable for surveillance cameras, which are real-time videos, because it has high object detection speed although accuracy thereof is low. Unlike other object-based algorithms (Faster R-CNN, R_FCN, FPN-FRCN etc.), the YOLO algorithm resizes one input image, allows the image to pass through a single neural network only once, and outputs a bounding box for informing of a location of each object and classification probability indicating what an object is, as a result.

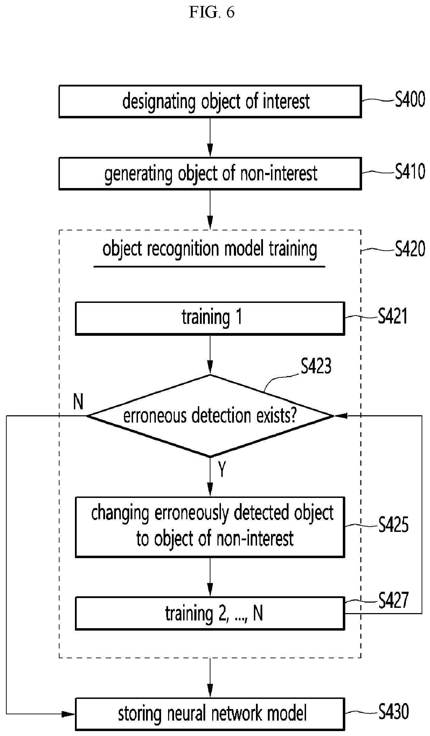

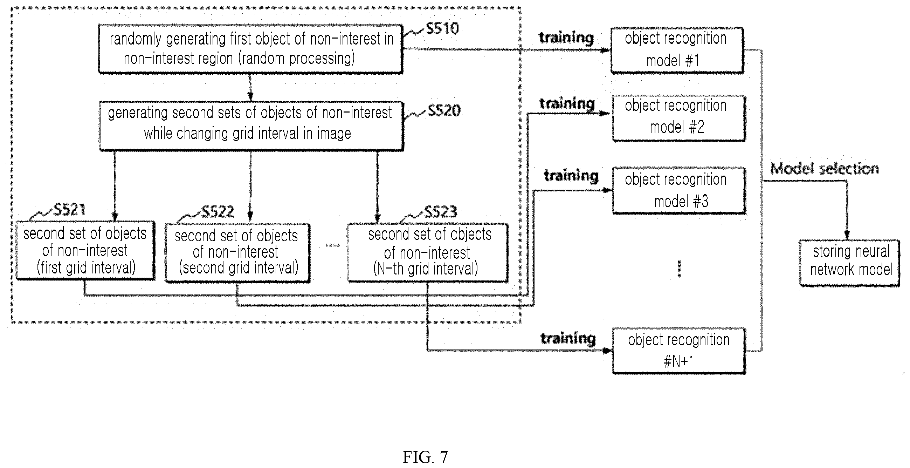

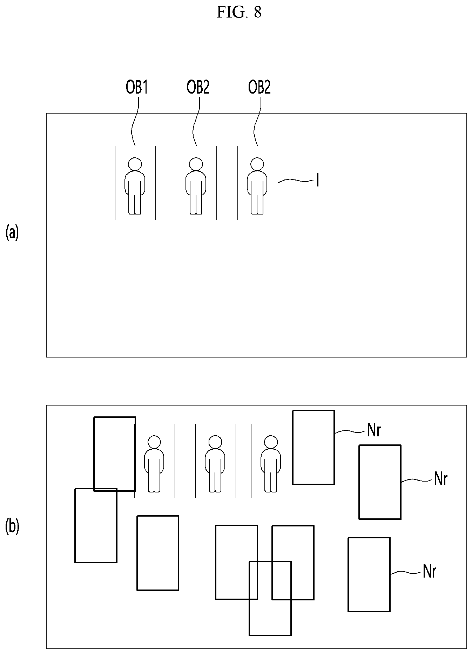

FIG. 6 is a flowchart of a method for training the object recognition model according to one embodiment of the present disclosure. FIG. 7 is a diagram illustrating a process of using an object of non-interest as learning data in a training process of the object recognition model according to one embodiment of the present disclosure. FIGS. 8 are diagrams for explaining an example of generating learning data of the object recognition model according to one embodiment of the present disclosure.

The object recognition model training method may be performed by the processor 250 of the computing device 200(200 of FIG. 1 and FIG.4) which executes instructions or program codes related to the object detection module 231, the object of non-interest designation module 232, the object recognition model training module 233, and the false detection determination module 234. Hereinafter, for convenience of description, the object recognition model training method will be described as being implemented through the processor 250.

Referring to FIGS. 6 to 8, the processor 250 may receive an input for designating an object of interest in an image acquired through a camera (S400). The computing device 200 may include a display associated with an input device, and the processor 250 may receive a user input for designating an object of interest through the input device. The processor 250 may display bounding boxes I with respect to objects of interest OB1, OB2, and OB3 selected as the user input is received, and extract location information (coordinate information) of the bounding boxes (see (a) of FIG. 8).

The processor 250 may generate an object of non-interest by designating at least a portion of a region excluding the object of interest in the image (S410). As shown in (b) of FIG. 8, the processor 250 may generate a plurality of objects of non-interest Nr. However, although (b) of FIG. 8 displays a bounding box of the object of non-interest Nr for convenience of explanation, the computing device 200 may not display the generated object of non-interest on the display so as to be visually differentiated. The generation of the object of non-interest may refer to the operation of the object of non-interest designation module 232 in FIG. 4.

The processor 250 may train an object recognition model by using the object of interest and the object of non-interest as learning data (S420).

According to one embodiment, the processor 250 may perform the first training using the previously prepared learning data (S421). The processor 250 may perform an object operation using the first trained model.

The processor 250 may determine whether false detection exists as a result of the object recognition (S423). The erroneously detected object may mean a case in which an object not designated as an object of interest is recognized as a result of performing an object recognition operation by applying the trained object recognition model.

According to one embodiment, the processor 250 may determine whether false detection is detected by calculating an overlap ratio of a pre-designated object of interest and an object recognized as a result of performing the object recognition operation. The processor 250 may calculate the overlap ratio between the object of interest and the object recognized as a result of performing the object recognition operation by using an intersection over union (IoU) method.

According to one embodiment, the processor 250 may calculate a similarity between the object of interest and the object recognized as a result of the object recognition operation. The processor 250 may calculate a similarity indicating a correlation between a first feature vector of the object of interest and a second feature vector of the recognized object as a result of the object recognition operation as a numerical value. The processor 250 may check whether false detection is detected depending on the similarity.

According to one embodiment, the processor 250 may determine whether the object of interest is normally recognized based on the overlap ratio and the similarity.

When it is determined that the erroneously detected object exists (Y in S423), the processor 250 may change the erroneously detected object to an object of non-interest (S425). According to one embodiment, the processor 250 may execute instructions or program codes for designating the erroneously detected object as an object of non-interest in a state not indicated on the display of the computing device so that the user may check whether the erroneously detected object exists or not and/or conversion status to the object of non-interest.

The processor 250 may retrain the object recognition model by using the object changed from the erroneously detected object to the object of non-interest as learning data (S427).

The processor 250 may repeatedly perform steps S421, S423, and S427 and, when false detection does not exist (N in S423), may end training and store the trained model as a neural network model (S430). That is, in the process of performing iterative training from training 1 to training N, if there is no false detection as a result of object recognition based on the Nth iterative training result, the processor 250 terminates the iterative learning and store the object recognition model (neural network model) training up to the Nth iterative learning.

In the repeated training process, the processor 250 may automatically extract false detection location information based on the previously trained model and change it to an object of non-interest.

In addition, the processor 250 may select an object of non-interest that is helpful for training based on the previously trained model in the repeated training process. According to one embodiment, the processor 250 may select an object of non-interest based on the confidence score of the previously trained model.

FIG. 7 is a diagram illustrating a process of using an object of non-interest as learning data in a training process of the object recognition model according to one embodiment of the present disclosure.

Referring to FIG. 7, the processor 250 may randomly generate a first object of non-interest in a region of non-interest excluding the object of interest in an image after the object of interest is designated (S510). The processor 250 may train the first object recognition model using the pre-designated object of interest and the first object of non-interest as learning data.

The processor 250 may generate a plurality of second sets of obj ects of non-interest while changing the grid interval (S520).

the processor 250 may select a model having the highest reliability among a plurality of object recognition models (object recognition model #1, object recognition model #2, object recognition model #3, and object recognition model #n) trained based on a plurality sets of objects of non-interest and store the same as a neural network model. According to one embodiment, the processor 250 may generate a validation set based on the previously prepared learning data, and may select a model having the highest reliability among N number of object recognition models based on the verification set.

Meanwhile, in FIG. 7, although a process of generating the different sets of objects of non-interest while the processor 250 changes the grid interval of the image N times has been described, N may be flexibly selected by the processor 250 in the process of training the object recognition model. When the confidence score of the object recognition model based on the set of objects of non-interest generated in the first grid interval state is equal to or greater than a predetermined threshold, the processor 250 may end generation of the set of obj ects of non-interest. That is, the processor 250 may adjust the number of generation of the set of objects of non-interest until the object recognition learning model that reaches the predetermined confidence score value is implemented.

In one embodiment of the present disclosure, training N number of object recognition models by generating N number of sets of objects of non-interest cannot completely eliminate the uncertainty of object of non-interest selection even if the object of non-interest is randomly designated by the processor or the object of non-interest is designated while the processor changes a predetermined grid interval. The sets of objects of non-interest randomly designated by the processor may have limitations in reducing the probability of false detection. Accordingly, the present disclosure may increase the reliability of the object recognition model through a process of independently training an object recognition model based on the sets of objects of non-interest having different attributes, and selecting an optimal model based on a validation set.

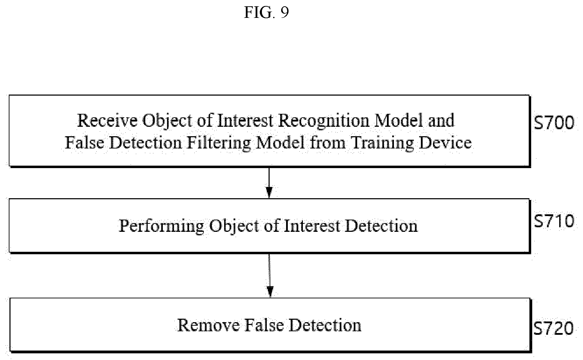

FIG. 9 is a flowchart of an object detection method in an object detection device according to an embodiment of the present disclosure. The object detection device may be the image capture device (100 in FIG. 1), and the object detection method shown in FIG. 9 may be implemented through the processor 160 and/or the AI processor 150 of the image capture device. For convenience of description, the object detection method is described as being performed through a command of the processor 160.

The processor 160 may receive the object of interest recognition model and the false detection filtering model from the training device (S700). The training device may correspond to the image management server (200 in FIG. 1) and may include any computing device capable of training an object recognition model and/or a false detection filtering model.

The object of interest recognition model trained in the training device may refer to a neural network model trained based on based on an object of interest designated by a user and an object of non-interest generated according to a predetermined criterion in a remaining region excluding the object of interest in an image obtained through the image capture device.

The false detection filtering model may refer to filtering data or a filtering model generated based on object information of the object of interest. The filtering data may include feature vector-based probability distribution data generated by modeling a feature distribution of the object of interest. Also, the filtering data may refer to primary color information of the object of interest, and may include filtering data for filtering a color different from the object of interest as an erroneously detected obj ect. When the training device implements a feature vector-based false detection filtering model and a color-based false detection filtering model and transmits them to the image capture device, the image capture device may apply the feature vector-based false detection filtering model and the color-based false detection filtering model in the process of determining a false detection during an object recogntino operation.

In the present disclosure, a process for determining false detection may be classified as two types. A first determination of false detection may be a process of determining whether an object other than the object of interest designated by the user is detected in the process of training the object of interest recognition model. In addition, a second determination of false detection may be a process of filtering an erroneously detected object, which is a process of removing false detection based on feature information (feature vector information, color information) of a detected object in an actual infering step rather than a training step.

The processor 160 may detect an object of interest from the captured image based on the object of interest recognition model (S710).

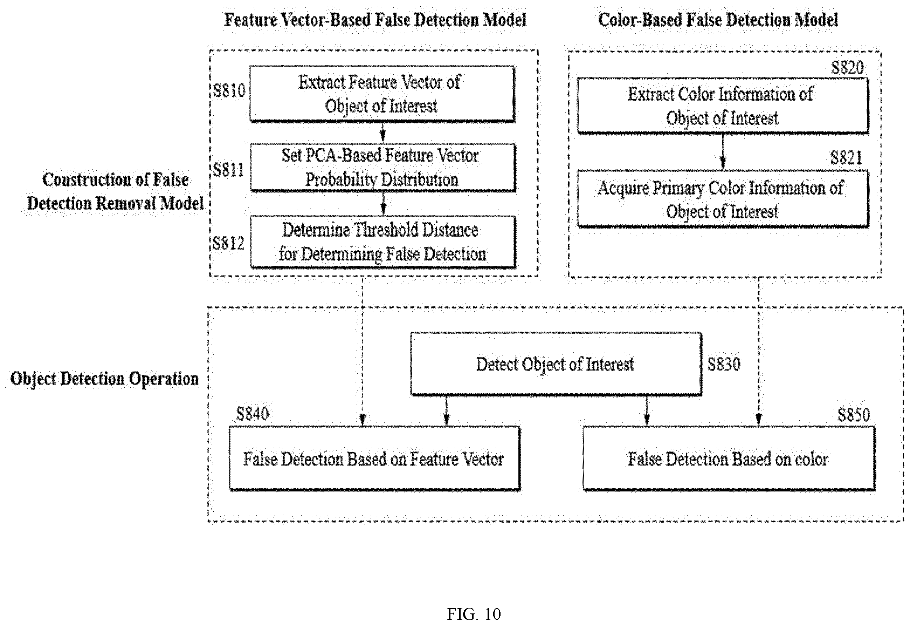

Regarding at least one detected object of interest candidate, the processor 160 may determine whether there is a erroneously detected object by applying the false detection filtering model according to an embodiment of the present disclosure and removing the erroneously detected object (S720). The processor 160 may filter the erroneously detected obj ect by applying the received feature vector-based false detection model. The processor 160 may filter the erroneously detected object by applying the received color-based false detection model. Hereinafter, a method of constructing a false detection filtering model in the training step will be described in more detail with reference to FIG. 10.

In this disclosure, a false detection filtering model may be a term used in the same meaning as terms, such as a false detection removal model and a false detection model.

FIG. 10 is a flowchart of an object recognition method according to an embodiment of the present disclosure. Referring to FIG. 10, a false detection removal model configuration and an object detection operation may be distinguished. The false detection removal model configuration may be implemented in the training device as described above, and the training device may include the image management server 200 shown in FIG. 1, a video management system (VMS), etc., and may include any computing device including a training function. In addition, the object detection operation may be performed in the image capture device (100 in FIG. 1) as described above, and the image capture device may include a surveillance camera. However, in the present disclosure, the object detection operation may also be performed in a image management server or the like other than the surveillance camera.

For the convenience of description, it is described that the configuration of the false detection filtering model is performed by a computing device having a training function, and the object recognition (detection) operation is performed by a surveillance camera.

The computing device extracts a feature vector of an object of interest to construct a feature vector-based false detection model (S810). Here, the object of interest may be an object designated by a user. The computing device may set a probability distribution of the feature vector based on the PCA analysis technique (S811). The computing device may determine a threshold distance for determining false detection based on the probability distribution of the set feature vector (S812). According to an embodiment, the computing device may determine an object existing outside the distribution of the model with respect to the distribution of the object of interest as a false detection and remove the object.

The computing device may set the mean and variance-based distribution of the collected objects of interest as a distribution for the object of interest. In the infering step, the computing device may determine whether the object of interest belongs to the object of interest distribution based on the Mahalanobis distance. The computing device may determine the object as an object of interest when the Mahalanobis distance is less than the threshold distance, and determine the object as an erroneously detected object when the Mahalanobis distance is greater than or equal to the threshold distance.

The computing device may determine stability of the false detection filtering model based on the distribution values of the collected objects of interest (positive samples). The computing device may determine stability below a certain threshold value based on a trace value for a covariance matrix.

The computing device may measure a color mainly represented by an object of interest and extract color information for classifying the object as a representative color in order to construct a color-based false detection model (S820). The computing device may acquire primary color information of the object of interest by analyzing colors in the CIE-LAB color space (S821). Color analysis and classification in the CIE-LAB color space may be analyzed through the average and standard deviation of L, A, and B channel pixels for each color, the brightness level may be divided into three levels, colors may be classified according to A and B values at each level, and a color closest to each pixel may be selected.

The feature vector-based false detection filtering model (first false detection model) and the color-based false detection filtering model (seond false detection model) configured in the computing device may be transmitted to the image capture device together with the object recognition model.

The image capture device may detect an object from the captured image in order to perform an object recognition operation based on an object recognition model (S830). The image capture device may perform a false detection removal operation using the received feature vector-based false detection removal model (S840). The image capture device may perform the false detection removal operation using the received color-based false detection removal model (S850).

The present disclosure described above may be implemented as a computer-readable code in a medium in which a program is recorded. The computer-readable medium includes any type of recording device in which data that may be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like. The computer-readable medium also includes implementations in the form of carrier waves (e.g., transmission via the Internet). Also, the computer may include the controller 180 of the terminal. Thus, the foregoing detailed description should not be interpreted limitedly in every aspect and should be considered to be illustrative. The scope of the present disclosure should be determined by reasonable interpretations of the attached claims and every modification within the equivalent range are included in the scope of the present disclosure.

The present disclosure described above may be implemented as computer-readable codes on a medium in which a program is recorded. The computer-readable medium includes all kinds of recording devices in which data readable by a computer system is stored. Examples of the computer-readable medium include a hard disk drive (HDD), a solid state disk (SSD), a silicon disk drive (SDD), ROM, RAM, CD-ROM, a magnetic tape, a floppy disk, and an optical data storage device, and other implementations in the form of carrier waves (e.g., transmission over the Internet). Therefore, the above detailed description should not be construed as limited in all respects but should be considered as exemplary. The scope of the present disclosure should be determined by reasonable interpretation of the appended claims, and all changes within the equivalent scope of the present disclosure are contained in the scope of the present disclosure.

## Claims

1. A false detection removal method of an image processing device comprising:
detecting an object of interest based on an object of interest recognition model in an image acquired from an image capture device;
removing feature-based false detection of the object of interest based on a first false detection filtering model;
removing color-based false detection of the object of interest based on a second false detection filtering model; and acquiring a final object of interest without the false detection.

2. The false detection removal method of claim 1, further comprising training the first false detection filtering model, wherein the training of the first false detection filtering model includes: extracting a specific vector of the object of interest designated in advance; and modeling a distribution of the object of interest on a coordinate space based on the feature vector.

3. The false detection removal method of claim 2, further comprising determining an object as an erroneously detected object when a Mahalanobis distance of a feature vector of the object of interest detected by the object of interest recognition model is greater than or equal to a threshold distance.

4. The false detection removal method as in any one of claims 1 to 3, further comprising raining the second false detection filtering model, wherein the training of the second false detection filtering model may include: extracting color information of the object of interest designated in advance; and acquiring a primary color of the object of interest by analyzing colors in the CIE-LAB color space based on the color information.

5. The false detection removal method as in any one of claims 1 to 4, further comprising training the object of interest recognition model,
wherein the training of the object of interest recognition model comprising:
receiving a user input designating the object of interest in the image; generating a object of non-interest in at least a portion of a region except for the object of interest in the image; and
training the object of interest recognition model using the object of interest and the object of non-interest as training data.

6. The false detection removal method of claim 5, comprising:
performing first learning using the trained object recognition model; and
additionally performing training N times after the first learning; and automatically extracting location information of an erroneously detected object based on an immediately previous learning result for each learning and changing the erroneously detected object into the obj ect of non-interest.

7. An image processing device, comprising:
an image acquisition unit;
a storage unit configured to store a previously trained object of interest recognition model, a first false detection filtering model, and a second false detection filtering model; and
a processor configured to detect an object of interest based on the object of interest recognition model from an image acquired by the image acquisition unit, remove false detection based on a feature of the object of interest by applying the first false detection filtering model to the detected object of interest; and remove color-based false detection for the object of interest by applying the second false detection filtering model.

8. The image processing device of claim 1, wherein the processor configured to extract a feature vector of the object of interest designated in advance, and train the first false detection filtering model to model a distribution of the object of interest in a coordinate space based on the feature vector.

9. The image processing device of claim 8, wherein the processor is configured to determine the object as an erroneously detected object when the Mahalanobis distance of the feature vector of the object of interest detected by the object of interest recognition model is greater than or equal to a threshold distance.

10. The image processing device as in any one of claims 7 to 9, wherein the processor is configured to;
extract color information of the object of interest designated in advance, and
train the second false detection filtering model to acquire a primary color of the object of interest by analyzing colors in the CIE-LAB color space based on the color information.

11. The image processing device as in any one of claims 7 to 10, wherein the processor is configured to;
receive a user input designating the object of interest in the image,
generate an object of non-interest in at least a portion of a region except for the object of interest in the image, and
train the object of interest recognition model using the object of interest and the object of non-interest as learning data.

12. The image processing device as in any one of claims 7 to 11, wherein the processor is configured to;
perform first learning using the trained object recognition model, and
additionally perform training N times after the first learning, and automatically extracting location information of a fasely detected object based on an immediately previous learning result for each learning and change the fasely detected object into the object of non-interest.

13. The image processing device as in any one of claims 7 to 12, further comprising:
a wireless communication unit, and
wherein the image acquisition unit is cofngirued to obtain a captured image from an external image capture device through the wireless communication unit.

14. The image processing device as in any of claims 7 to 13, further comprising a wireless communication unit,
wherein the processor is configured to transmit the object of interest recognition model, the first false detection filtering model, and the second false detection filtering model stored in the storage unit to an image capture device through the wireless communication unit.
